(19) Europäisches Patentamt
European Patent Office
Office européen des brevets

(11) **EP 2 607 415 B1**

(12) **EUROPEAN PATENT SPECIFICATION**

(45) Date of publication and mention
of the grant of the patent:
**06.05.2015 Bulletin 2015/19**

(51) Int Cl.:
***C08J 5/18*** *(2006.01)*        ***C08L 67/04*** *(2006.01)*
***C08L 101/16*** *(2006.01)*

(21) Application number: **11818107.2**

(22) Date of filing: **10.08.2011**

(86) International application number:
**PCT/JP2011/068216**

(87) International publication number:
**WO 2012/023465 (23.02.2012 Gazette 2012/08)**

(54) **POROUS FILM**

**PORÖSER FILM**

**FILM POREUX**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.08.2010  JP 2010182840**

(43) Date of publication of application:
**26.06.2013  Bulletin 2013/26**

(73) Proprietor: **Toray Industries, Inc.
Tokyo 103-8666 (JP)**

(72) Inventors:
• **YAMAMURA, Gouhei
  Shiga 520-8558 (JP)**
• **SAKAMOTO, Jun
  Shiga 520-8558 (JP)**

• **SUEOKA, Masanori
  Shiga 520-8558 (JP)**
• **SHINNUMADATE, Hiroshi
  Shiga 520-8558 (JP)**

(74) Representative: **Prüfer & Partner GbR
European Patent Attorneys
Sohnckestraße 12
81479 München (DE)**

(56) References cited:
**EP-A2- 0 510 998       JP-A- 2003 082 140
JP-A- 2004 149 679     JP-A- 2007 186 543**

• **DATABASE WPI Week 200760 Thomson
  Scientific, London, GB; AN 2007-631134
  XP002716547, & JP 2007 186543 A (HIRAOKA
  SHOKUSEN KK) 26 July 2007 (2007-07-26)**

**Description**

Technical field

The present invention relates to a polylactic acid based porous film.

Background art

With the heightening of environment consciousness in recent years, attention is focused on soil contamination problems caused by waste plastic products, and attention is also focused on global warming problems due to an increase in the carbon dioxide concentration caused by combustion of waste. Research and development studies have been performed actively on various biodegradable resins and biomass (plant-derived material) based resins, whose incineration will not increase the carbon dioxide load to the atmosphere, as means of solving the former and the latter problems, respectively. Expectations are growing for polylactic acid, which are able to meet both of the above purposes and relatively advantageous in terms of cost as well. However, polylactic acid materials cannot be sufficiently high in flexibility and impact resistance if applied to uses where soft films of polyolefins such as polyethylene have been adopted as representative materials, and a variety of attempts are being made in an effort to improve them in these characteristics to provide practical materials.

In the field of porous film production, Patent document 1, for instance, has disclosed a porous sheet that is produced by stretching at least uniaxially a sheet containing a polylactic acid resin, a filler, and a common polyester based plasticizer, Patent document 2 has disclosed a porous film produced from a film containing a polylactic acid based polymer, aliphatic aromatic copolymerization polyester, and in addition, a common plasticizer selected from the group of an aliphatic multivalent carboxylate, aliphatic polyhydric alcohol ester, aliphatic polyhydric alcohol ether, and oxyacid ester, in which pores are formed by adding a fine powder filler. Patent document 3 has disclosed a porous film comprising a polylactic acid, at least one polymer selected from an aliphatic-aromatic polyester, polyester-carbonate and an aliphatic polyester, and a fine powder filler, with the porosity being at least 10%.

Prior art documents

Patent documents

Patent document 1: Japanese Unexamined Patent Publication (Kokai) No. 2007-112867
Patent document 2: Japanese Unexamined Patent Publication (Kokai) No. 2004-149679
Patent document 3: Japanese Unexamined Patent Publication (Kokai) No. 2003-82140

Summary of the invention

Problems to be solved by the invention

The techniques described in Patent document 1 and Patent document 2 are not sufficiently effective in improving moisture permeability, though able to a certain extent, and resultant films are poor in heat resistance and bleed-out resistance. The film produced is required to have high heat resistance to provide products with improved processability. In addition to processability, bleed-out resistance is necessary to further improve quality of the resulting product.

Thus, although studies have been made aiming to provide soft films with high moisture permeability, biodegradability and high biomass content, they all have failed to have a sufficient moisture permeability, and no efforts have been successful in inventing films having both high moisture permeability and high bleed-out resistance.

In view of these conventional techniques, the present invention aims to provide a polylactic acid based porous film that is high in flexibility, moisture permeability, heat resistance and bleed-out resistance.

Means of solving the problems

The invention provides a porous film including a polylactic acid based resin (A), a thermoplastic resin (B) that is not a polylactic acid based resin, and a filler (C), wherein
resin (A) and resin (B) account for 10 to 95 mass% and 5 to 90 mass%, respectively, of the sum total 100 mass% of resin (A) and resin (B), while the filler (C) accounts for 1 to 400 parts by mass of the sum total 100 parts by mass of resin (A) and resin (B),

with the porosity being 1 to 80%.

Another embodiment of the invention provides a porous film including a polylactic acid based resin (A) and a thermoplastic resin (B) that is not a polylactic acid based resin, wherein

the moisture permeability is 1,000 g/(m$^2$·day) or more,

the mass loss ratio after hot-water treatment being 10% or less, and

the tensile modulus being 50 to 2,000 MPa.

Effect of the invention

The present invention provides a polylactic acid based porous film that has high flexibility, moisture permeability, heat resistance, and bleed-out resistance. The porous film according to the invention can be used preferably for uses that require flexibility, moisture permeability, and heat resistance. Specific applications include medical and sanitary supplies such as base sheets of bed sheets, pillow covers, sanitary napkins, paper diapers, and other absorbent products; clothing materials such as rain apparels gloves; and packaging materials such as trash bags, compost bags, food bags for vegetables, fruits, etc., and bags for various industrial products.

Description of embodiments

As a result of intensive studies on the above problem relating to polylactic acid based porous films with improved flexibility, moisture permeability, heat resistance and bleed-out resistance, the inventors have found that the problem can be solved by a film having a specific composition and has a porosity that meets certain requirements.

Specifically, the invention provides a porous film including a polylactic acid based resin (A), a thermoplastic resin (B) that is not a polylactic acid based resin, and a filler (C), wherein

resin (A) and resin (B) account for 10 to 95 mass% and 5 to 90 mass%, respectively, of the sum total (100 mass%) of resin (A) and resin (B), while the filler (C) accounts for 1 to 400 parts by mass of the sum total (100 parts by mass) of resin (A) and resin (B),

with the porosity being 1 to 80%.

The porous film according to the present invention is described in detail below.

(Resin (A) (polylactic acid based resin))

It is important that the porous film according to the present invention contains a polylactic acid based resin (for the invention, referred to as resin (A)). A polylactic acid based resin is defined as a polymer including, as a main component, a monomer unit selected from the group of L-lactic acid and D-lactic acid. Here, the "main component" accounts for the largest proportion by mass of the lactic acid units among the constituent units of a polymer. The lactic acid units preferably account for a mass proportion of 70 mass% to 100 mass% per 100 mass% of the polymer.

The preferred polylactic acid based resins include poly-L-lactic acid and poly-D-lactic acid. A poly-L-lactic acid as referred to for the present invention is a polymer in which the poly-L-lactic acid accounts for more than 50 mol% and 100 mol% or less of the total lactic acid units, which account for 100 mol%. A poly-D-lactic acid as referred to for the present invention, on the other hand, is a polymer in which the poly-D-lactic acid accounts for more than 50 mol% and 100 mol% or less of the total lactic acid units, which account for 100 mol%.

A poly-L-lactic acid changes in resin crystallinity depending on the content of D-lactic acid units. Thus, a poly-L-lactic acid material decreases in crystallinity and increases in amorphousness with an increasing content of D-lactic acid units in the poly-L-lactic acid material. On the contrary, a poly-L-lactic acid material decreases in crystallinity with a decreasing content of D-lactic acid units in the poly-L-lactic acid material Similarly, a poly-D-lactic acid changes in resin crystallinity depending on the content of L-lactic acid units. Thus, a poly-D-lactic acid material decreases in crystallinity and increases in amorphousness with an increasing content of L-lactic acid units in the poly-D-lactic acid material On the contrary, a poly-D-lactic acid material decreases in crystallinity with a decreasing content of L-lactic acid units in the poly-D-lactic acid material

The L-lactic acid units in a poly-L-lactic acid, or the D-lactic acid units in a poly-D-lactic acid preferably accounts for 80 to 100 mol%, more preferably 85 to 100 mol%, of the total lactic acid units, which account for 100mol%, from the viewpoint of maintaining required mechanical strength.

A polylactic acid based resin to be used for the present invention may be a copolymer containing other monomer units that are not lactic acid units. Such other monomers include glycol compounds such as ethylene glycol, propylene glycol, butanediol, heptanediol, hexanediol, octanediol, nonane diol, decanediol, 1,4-cyclohexane dimetanol, neopentyl glycol, glycerin, pentaerythritol, bisphenol A, polyethylene glycol, polypropylene glycol, and polytetramethylene glycol; dicarboxylic acids such as oxalic acid, succinic acid, adipic acid, sebacic acid, azelaic acid, dodecanedioic acid, malonic acid, glutaric acid, cyclohexanedicarboxylic acid, terephthalic acid, isophthalic acid, phthalic acid, naphthalene dicarboxylic acid, bis(p-carboxyphenyl) methane, anthracene dicarboxylic acid, 4,4'-diphenyl ether dicarboxylic acid, 5-sodium sulfoisophthalic acid, and 5-tetrabutyl phosphonium isophthalic acid; hydroxycarboxylic acids such as glycolic acid, hydroxypropionic acid, hydroxybutyric acid, hydroxyvaleric acid, hydroxycaproic acid, and hydroxybenzoic acid; and lactones such as caprolactone, valerolactone, propiolactone, undeca lactone, and 1,5-oxepane- 2-one. Said other monomer units in a copolymer preferably account for 0 to 30 mol%, more preferably 0 to 10 mol%, of the total monomer units, which account for 100 mol% of the polymer. Of the monomer units given above, it is preferable to use biodegradable ones, depending on uses.

With respect to the polylactic acid based resin, it is also preferable that a small amount of poly-D-lactic acid is added to a polylactic acid based resin that contains poly-L-lactic acid as primary component or that a small amount of poly-L-lactic acid is added to one that contains poly-D-lactic acid as primary component. This is because stereocomplex crystals thus formed have a higher melting point than common polylactic acid crystals ($\alpha$-crystals), and form a film with improved heat resistance.

To have practical mechanical characteristics, the lactic acid based resin preferably has a mass average molecular weight of 50,000 to 500,000, more preferably 80,000 to 400,000, and still more preferably 100,000 to 300,000.

Some known polymerization methods can serve to produce a polylactic acid based resin, as described in detail later. Specifically, they include direct polymerization from lactic acid, and ring opening polymerization via a lactide.

It is important for resin (A) contained in the porous film according to the present invention to account for 10 to 95 parts by mass assuming that resin (A) and resin (B), which is described in detail later, in total account for 100 parts by mass. The heat resistance and bleed-out resistance will not be sufficiently high if the content of resin (A) is less than 10 mass% of the sum total of resin (A) and resin (B), which account for 100 mass%. The flexibility will not be sufficiently high if the content of resin (A) exceeds 95 mass%. Resin (A) preferably accounts for 20 to 90 mass%, more preferably 30 to 85 mass%, and still more preferably 40 to 80 mass%, assuming that resin (A) and resin (B) in total account for 100 mass%.

The content of resin (A) in the entire porous film according to the present invention preferably accounts for 5 to 80 mass%, more preferably 15 to 70 mass%, still more preferably 25 to 60 mass%, and particularly preferably 35 to 50 mass%.

(Resin (B) (a thermoplastic resin that is not a polylactic acid based resin))

It is important that the porous film according to the present invention contains a thermoplastic resin (for the invention, referred to as resin (B)) that is not a polylactic acid based resin to ensure improved flexibility and moisture permeability. Such thermoplastic resins include polyacetal, polyethylene, polypropylene, polyamide, poly(meth)acrylate, polyphenylene sulfide, polyether ether ketone, polyester, polyurethane, polyisoprene, polysulfone, polyphenylene oxide, polyimide, polyetherimide, ethylene / glycidylmethacrylate copolymer, polyester elastomer, polyamide elastomer, ethylene / propylene terpolymer, ethylene / butene-1 copolymer, starch-containing polymer, and resin based plasticizer.

Specific example of usable polyesters include aromatic polyester based resins such as polyethylene terephthalate, polypropylene terephthalate, and polybutylene terephthalate; aliphatic aromatic polyester based resins such as poly(ethylene succinate - terephthalate), poly(butylene succinate - terephthalate), and poly(butylene adipate - terephthalate); and aliphatic polyester based resins such as polyglycolic acid, poly(3-hydroxybutyrate), poly(3-hydroxybutyrate - 3-hydroxyvalerate), polycaprolactone, polybutylene succinate, and poly(butylene succinate - adipate). Of these, an aliphatic-aromatic polyester based resin or an aliphatic polyester based resin is preferable from the viewpoint of improving the flexibility, moisture permeability, and biodegradability.

Specific examples of usable starch-containing polymers include Mater-Bi (registered trademark), a biodegradable resin product supplied by Novamont.

Specific examples of the resin based plasticizer include polyester based plasticizers, such as polypropylene glycol sebaciate, polyalkylene ether based plasticizers, ether ester based plasticizers, and acrylate based plasticizers.

To depress bleed-out while increasing plasticization efficiency, the resin based plasticizer to be used preferably has a solubility parameter, SP, of 16 to 23 $(MJ/m^3)^{1/2}$, more preferably 17 to 21 $(MJ/m^3)^{1/2}$. To calculate the solubility parameter, a calculation method is shown by P. Small, J. Appl. Chem., 3, 71 (1953). Of these plasticizer, the resin based plasticizer to be used as resin (B) is preferably a biodegradability plasticizer from the viewpoint of maintaining the biodegradability of the entire film.

In view of the suitability in the fields of food packaging and for uses in the fields of agriculture and forestry, it is preferable that a resin based plasticizer to be adopted is one whose use is permitted by the U.S. Food and Drug Administration, Japan Hygienic Olefin And Styrene Plastics Association, or other such organizations, because undecomposed residues can remain, though temporarily, in compost or agricultural land. Such plasticizers include, for instance, glycerin fatty acid ester, sucrose fatty acid ester, sorbitan fatty acid ester, bis(alkyl diglycol) adipate, and polyethylene glycol.

From the viewpoint of the bleed-out resistance of the plasticizer and the heat resistance and blocking resistance of the film, it is preferable that a resin based plasticizer to be used as resin (B) is in a solid state at room temperature (20°C ±15°C), or more specifically, it preferably has a melting point above 35°C, like, for instance, polyethylene glycol with a number average molecular weight of 1,000 or more. It is also preferable that it has a melting point of 150°C or less in view of the temperature for melt-processing with a polylactic acid based resin.

From the same viewpoint, it is preferable that a resin based plasticizer to be used as resin (B) is either a block copolymer having a polyether segment and a polylactic acid segment, or a block copolymer having a polyester segment and a polylactic acid segment. Here, the polyether segment and the polyester segment act as a plasticizer component. A polyester segment as referred to herein means a segment that is formed of a polyester that is not a polylactic acid. Block copolymers having a polyether segment and a polylactic acid segment and block copolymers having a polyester segment and polylactic acid segment hereinafter are generically called block copolymer plasticizers. These block copolymer plasticizers are described below.

The mass content of the polylactic acid segment in a block copolymer plasticizer is preferably 50 mass% or less of the entire block copolymer plasticizer because it can work effectively in a small amount to develop an intended flexibility, and it is preferably 5 mass% or more from the viewpoint of depressing the bleed-out. It is preferable that in 100 mass% of a block copolymer plasticizer, the mass content of the lactic acid unit is 5 mass% to 45 mass%, and the mass contents of the polyether segment and polyester segment are 55 mass% to 95 mass%.

It is preferable that in a molecule of a block copolymer plasticizer, the polylactic acid segment has a number average molecular weight of 1,200 to 10,000. If the polylactic acid segment in a block copolymer plasticizer has a number average molecular weight of 1,200 or more, an adequate affinity will develop between the block copolymer plasticizer used as resin (B) and the polylactic acid based resin used as resin (A). Part of the polylactic acid segment is incorporated into crystals grown from resin (A) and forms so-called eutectic crystals, which then act to tie the block copolymer plasticizer used as resin (B) to resin (A), serving very effectively to depress the bleed-out of the block copolymer plasticizer. Consequently, the resulting film will have a high blocking resistance. This block copolymer plasticizer, furthermore, is high in moisture permeability as compared with plasticizers that are in a liquid state at room temperature and those unable to form eutectic crystals in spite of being in a solid state at room temperature. This is because the resulting eutectic crystals serve to improve the pore formation efficiency due to stretching as described later. The number average molecular weight of the polylactic acid segment in a block copolymer plasticizer is more preferably 1,500 to 6,000, and still more preferably 2,000 to 5,000. To depress the bleed-out, in particular, it is preferable that the L-lactic acid unit accounts for 95 to 100 mass% or D-lactic acid unit accounts for 95 to 100 mass% of the polylactic acid segment in a block copolymer plasticizer.

If the block copolymer plasticizer contains a polyether segment, the polyether segment contained in it is preferably a polyalkylene ether based segment. Specific examples of the polyether segment include segments formed of polyethylene glycol, polypropylene glycol, polytetramethylene glycol, and polyethylene glycol/polypropylene glycol copolymer. The use of a polyethylene glycol based segment, in particular, is preferable because it is high in the affinity with resin (A) (polylactic acid based resin) to ensure a high modification efficiency, and particularly because addition of a small amount of a plasticizer can serve to develop an intended flexibility.

If the block copolymer plasticizer used contains a polyalkylene ether based segment, however, the polyalkylene ether segment tends to be easily oxidized or heat-decomposed when heated during molding or other steps, and therefore, it is preferable to add an antioxidant such as hindered phenolic antioxidant and hindered amine based antioxidant or a thermal stabilizer such as phosphorous thermal stabilizer, which will be described later.

If the block copolymer plasticizer used has a polyester segment, the polyester segment used is preferably a polyester formed from an aliphatic diol, such as polyglycolic acid, poly(3-hydroxybutyrate), poly(3-hydroxybutyrate 3-hydroxyvalerate), polycaprolactone, ethylene glycol, propanediol, and butanediol, and an aliphatic dicarboxylic acid such as succinic acid and sebacic acid, adipic acid.

Here, the block copolymer plasticizer may contain both a polyether segment and a polyester segment or only either of the segments in one molecule. If only one component is used plasticizer for productivity- or cost-related reasons, it is preferable to adopt a polyether segment because addition of a small amount of the plasticizer can work effectively to develop an intended flexibility. Thus, the most preferable block copolymer plasticizer is a block copolymer of a polyether segment and a polylactic acid segment.

It is preferable, furthermore, that in a molecule of a block copolymer plasticizer, the polyether segment and the polyester segment has a number average molecular weight of 7,000 to 20,000. If they are in the above range, the resulting composition to form a porous film will have an adequate flexibility, and at the same time, the composition containing resin (A) (polylactic acid based resin) will be able to have a moderate level of melt viscosity, thereby serving to maintain stable film production processability during film production by, for instance, inflation molding.

There are no specific limitations on the order of connection between the segment blocks of the polyether segment and/or polyester segment and the polylactic acid segment, but it is preferable that at least one block of the polylactic acid segment is located at the end of the molecule of the block copolymer plasticizer from the viewpoint of effective depressing of bleed-out. It is most preferable that a block of the polylactic acid segment is located at both ends of the block copolymer plasticizer molecule.

Described in detail below is a block copolymer plasticizer that contains a polyethylene glycol (hereinafter, polyethylene glycol is abbreviate as PEG) having a hydroxyl terminal group at both ends as the polyether segment.

For commercial PEG products, the number average molecular weight of PEG with a hydroxyl group at both ends is commonly calculated from hydroxyl value determined by the neutralization method (hereinafter, the number average molecular weight of PEG is denoted as $M_{PEG}$). A virtually PLA-PEG-PLA type block copolymer (here, PLA denotes polylactic acid) can be produced by preparing a mixture by adding $w_L$ parts by mass of a lactide to $w_E$ parts by mass to a PEG having a hydroxyl terminal group at both ends and carrying out polymerization thoroughly through ring opening reaction of lactide molecules and their addition to the hydroxyl terminal groups at both ends of the PEG molecules. This reaction is carried out in the presence of a catalyst such as tin octylate as required. The number average molecular weight of a polylactic acid segment in this block copolymer plasticizer can be calculated as $(1/2) \times (w_L/w_E) \times M_{PEG}$. The mass content of the polylactic acid segment component in the entire block copolymer plasticizer is virtually determined as $100 \times w_L/(w_L+w_E)$ (%). The mass content of the plasticizer component excluding the polylactic acid segment component in the entire block copolymer plasticizer is virtually determined as $100 \times w_E / (w_L+ w_E)$ (%).

If the number average molecular weight of a segment in the block copolymer plasticizer is to be evaluated after separating the block copolymer plasticizer from the resulting film, the following procedure may be carried out. To separate the block copolymer plasticizer from a film, the film is dissolved uniformly in a good solvent such as, for instance, chloroform, and the solution is added dropwise to an appropriate poor solvent such as water and water/methanol mixture solution. The sediment is removed by, for instance, filtration, and the solvent in the filtrate is evaporated to separate the block copolymer plasticizer. The block copolymer plasticizer thus separated is subjected to gel permeation chromatography (GPC) to determine the number average molecular weight (hereinafter abbreviated as M). Then, $^1$H-NMR measurement is carried out to identify the polylactic acid segment, polyether based segment and/or polyester based segment. The molecular weight of the polylactic acid segment in a block copolymer is calculated as: $M \times \{1 / (\text{number of polylactic acid segment units in one molecule})\} \times (I_{PLA} \times 72) / [(I_{PE} \times UM_{PE} / N_{PE}) + (I_{PLA} \times 72)]$. Here, $I_{PLA}$ denotes the integrated intensity of signals from $^1$H-NMR measurement attributed to the hydrogen of the methine group in the PLA backbone chain, while $I_{PE}$ denotes the integrated intensity of signals from $^1$H-NMR measurement attributed to the polyether based segment and/or polyester based segment. Furthermore, $UM_{PE}$ represents the molecular weight of the monomer units of the polyether based segment and/or polyester based segment, while $N_{PE}$ represents the number of chemically equivalent protons in the polyether based segment and/or polyester based segment that give $^1$H-NMR signals corresponding to $I_{PE}$. The number average molecular weight of the polyether based segment and/or polyester based segment can be calculated as: $M - (\text{number average molecular weight of polylactic acid segment}) \times (\text{number of polylactic acid segment units in one molecule})$.

Depending on the type of the resin used, the effects of containing resin (B) other than those associated with flexibility or moisture permeability include, for instance, stabilization of bubble formation during film production performed by inflation molding due to improved melt viscosity and melt tension. Other effects include improvement in the high-temperature rigidity of the resulting porous film when containing poly(meth)acrylate as resin (B), improvement in the impact resistance and ductility of the porous film when containing polyester, and promotion in the biodegradability of the porous film when containing a starch-containing polymer.

It is important for resin (B) contained in the porous film according to the present invention to account for 5 to 90 mass% assuming that resin (A) and resin (B) in total account for 100 mass%. The flexibility will not be sufficiently high if the content is less than 5 mass%. The heat resistance and bleed-out resistance will not be sufficiently high if the content is more than 90 mass%. Resin (B) preferably accounts for 10 to 80 mass%, more preferably 15 to 70 mass%, still more preferably 20 to 60 mass%, assuming that resin (A) and resin (B) in total account for 100 mass%.

(Combination of resins for resin (B))

The porous film according to the present invention may contain only one of the resins listed above for use as resin (B) or may contain one or more of them in combination. There are no specific limitations on the resins to be combined, and appropriate resins may be selected from the various thermoplastic resins that are not polylactic acid based resins given above for use as resin (B). Among others, the combination a resin based plasticizer and a thermoplastic resin that is not a resin based plasticizer is preferable from the viewpoint of maintaining both a high flexibility and moisture permeability. In particular, the present inventors have found that moisture permeability is dramatically improved when a combination of a resin based plasticizer and a thermoplastic resin that is not a resin based plasticizer is used as resin (B).

Of the resin based plasticizers, it is preferable to use a block copolymer plasticizer as mentioned above, i.e., either a block copolymer having a polyether segment and a polylactic acid segment or a block copolymer having a polyester segment and a polylactic acid segment, from the viewpoint of heat resistance, moisture permeability, blocking resistance, and bleed-out resistance. It is more preferable to use a block copolymer containing a polyether segment and a polylactic acid segment.

Of the thermoplastic resins that are not resin based plasticizers, aliphatic polyester based resins and aliphatic-aromatic polyester based resins are preferable from the viewpoint of biodegradability. More preferable aliphatic polyester based resins include polyglycolic acid, poly(3-hydroxybutyrate), poly(3-hydroxybutyrate - 3-hydroxyvalerate), poly(3-hydroxybutyrate - 3-hydroxyhexanoate), polycaprolactone, polybutylene succinate, and poly(butylene succinate - adipate). More preferable aliphatic-aromatic polyester based resins include poly(ethylene succinate - terephthalate), poly(butylene succinate - terephthalate), and poly(butylene adipate - terephthalate). Of these, it is still more preferable to use a resin selected from the group of polycaprolactone, poly(butylene succinate - adipate), and poly(butylene adipate - terephthalate) from the viewpoint of flexibility.

Thus, resin (B) is preferably at least one resin selected from the group of a block copolymer having a polyether segment and a polylactic acid segment, a block copolymer having a polyester segment and a polylactic acid segment, aliphatic polyester based resin, and aliphatic-aromatic polyester based resin. From the viewpoint of improvement in moisture permeability, furthermore, it is more preferable to use a combination of at least one resin (resin based plasticizer) selected from the group of a block copolymer having a polyether segment and a polylactic acid segment, and a block copolymer having a polyester segment and a polylactic acid segment, with at least another resin (thermoplastic resin that is not a resin based plasticizer) selected from the group of an aliphatic polyester based resin and aliphatic-aromatic polyester based resin.

When resin (B) is a combination of a resin based plasticizer and a thermoplastic resin that is not a resin based plasticizer, the compounding ratio by mass, which is represented as (resin based plasticizer / thermoplastic resin that is not resin based plasticizer), is preferably (5/95) to (95/5), more preferably (10/90) to (80/20), still more preferably (20/80) to (60/40).

(Mixing of crystalline polylactic acid based resin and amorphous polylactic acid based resin)

The resin (A) (polylactic acid based resin) contained the porous film according to the present invention is a mixture of a crystalline polylactic acid based resin and an amorphous polylactic acid based resin. This is because such a mixture can serve to maintain the advantages of both the crystalline and amorphous polylactic acid based resins.

A crystalline polylactic acid based resin as referred to here is a polylactic acid based resin having a melting point attributed to a polylactic acid component that is determined by subjecting the polylactic acid resin to differential scanning calorimetry (DSC) in an appropriate temperature range after heating it to ensure adequate crystallization. An amorphous polylactic acid based resin as referred to here, on the other hand, is a polylactic acid based resin that does not show a distinct melting point when subjected to similar observation.

The inclusion of a crystalline polylactic acid based resin is preferable for improving the heat resistance and blocking resistance of a film. If a block copolymer plasticizer as mentioned above is used as resin (B), the crystalline polylactic acid based resin can have large effect on improvement in bleed-out resistance as a result of forming eutectic crystals with the polylactic acid segment of the block copolymer plasticizer.

The inclusion of an amorphous polylactic acid based resin is preferable for improving the flexibility and bleed-out resistance of a film. This results from the fact that the amorphous polylactic acid based resin contained in the film acts to form an amorphous portion, where the plasticizer can be dispersed easily.

In the crystalline polylactic acid based resin, the L-lactic acid units in the poly-L-lactic acid or the D-lactic acid units in the poly-D-lactic acid preferably accounts for 96 to 100 mol%, more preferably 98 to 100 mol%, of the sum total lactic acid units, which account for 100mol%, from the viewpoint of improving the heat resistance and blocking resistance.

In the mixture of a crystalline polylactic acid based resin and an amorphous polylactic acid based resin the crystalline polylactic acid based resin accounts for 5 to 60 mass%, more preferably 10 to 50 mass%, and still more preferably 20 to 40 mass%, assuming that the total quantity of crystalline polylactic acid based resin and amorphous polylactic acid based resin accounts for 100 mass%.

(Filler (C))

It is preferable for the porous film according to the present invention to contain filler (C) to improve moisture permeability. An inorganic filler and/or organic filler can be used filler (C).

Here, "filler" refers to a substance to be added as a base material to improved specific characteristics or an inactive substance to be added for a specific purpose such as increasing the weight, increasing the volume, and reducing the product price.

Useful inorganic fillers include carbonates such as calcium carbonate, magnesium carbonate, and barium carbonate; sulfates such as magnesium sulfate, barium sulfate, and calcium sulfate; metal oxides such as zinc oxide, silicon oxide (silica), zirconium oxide, magnesium oxide, oxidized calcium, titanium oxide, magnesium oxide, iron oxide, alumina; hydroxides aluminum hydroxide; composite oxides such as silicate mineral, hydroxyapatite, mica, talc, kaolin, clay, and montmorillonite, zeolite; phosphates such as lithium phosphate, calcium phosphate, and magnesium phosphate; and metal salts such as lithium chloride and lithium fluoride.

Useful organic fillers include oxalic acid salt such as calcium oxalate; terephthalates such as calcium terephthalate, barium terephthalate, zinc terephthalate, manganese terephthalate, and magnesium terephthalate; fine particles of a homopolymer or a copolymer produced from vinyl based monomers such as such as divinylbenzene, styrene, acrylic acid, and methacrylic acid; organic fine particles of polytetrafluoroethylene, benzoguanamine resin, thermosetting epoxy resin, unsaturated polyester resin, thermosetting urea resin, and thermosetting phenol resin; cellulose based powders such as wood powder and pulp powder; chip-like materials such as hulls, wood chips, bean curd refuse, ground waste paper, and ground clothing; vegetable fibers such as cotton fiber, hemp fiber, bamboo fiber, wood fiber, kenaf fiber, jute fiber, banana fiber, and coconut fiber, animal fibers such as silk, wool, angora , cashmere, and camel, and synthetic fibers such as polyester fiber, nylon fiber, and acrylic fiber.

Of these fillers, calcium carbonate, barium carbonate, barium sulfate, calcium sulfate, silicon oxide (silica), titanium oxide, mica, talc, kaolin, clay, and montmorillonite are preferable from the viewpoint of improving moisture permeability of a film, maintaining mechanical characteristics, such as strength and elongation percentage, and reducing the costs.

There are no specific limitations on the average particle diameter of a filler, but it is preferably 0.01 to 10 $\mu$m. If the average particle diameter is 0.01 $\mu$m or more, the filler serves to fill the film to a high degree, and as a result, the film will have a high potential for improving in porosity and moisture permeability. If the average particle diameter is 10 $\mu$m or less, the film can be highly stretched, and as a result, the film will have a high potential for improving in porosity and moisture permeability. The average particle diameter is more preferably 0.1 to 8 $\mu$m, still more preferably 0.5 to 5 $\mu$m, and most preferably 1 to 3 $\mu$m. An average particle diameter as referred to herein is the average particle diameter at a 50% cumulative distribution determined by laser diffraction scattering.

The filler may be surface-treated as required. Useful surface treatment agents for this surface treatment include phosphate based compounds, fatty acids, surface active agents, fat and oil, wax, carboxylic acid based coupling agents, silane coupling agents, titanate coupling agents, and polymer based surface treatment agents Surface treatment of a filler serves to improve its affinity with the matrix resin, depressing the coagulation of the filler, improve its dispersibility, and allow it to be dispersed uniformly in a resin composition. As a result, it becomes possible to produce a film having high processability such as for stretching to develop high moisture permeability.

Useful phosphate based compounds include phosphate esters, phosphite esters, and pyrophosphate esters. Such a phosphate based compound may contain a plurality of phosphorus atoms in one molecule. In some cases, it is preferable to use a phosphate based compound having an unsaturated bond in a molecule, and the unsaturated bond may preferably be a double bond located at a molecular end.

Useful fatty acids include saturated fatty acid such as stearate, and unsaturated fatty acids such as oleic acid and linoleic acid.

Useful surface active agents include anion based surface active agents such as stearate soap and sulfonic acid soap, and nonionic based surface active agents such as polyethylene glycol derivatives.

Useful fats and oils include soybean oil and linseed oil.

Useful wax materials include carnauba wax, long chain ester wax, polyethylene wax, and polypropylene wax, as well as oxides and acid-modified products thereof.

Useful carboxylic acid based coupling agents include carboxylated polybutadiene and carboxylated polyisoprene.

Useful silane coupling agents vinyl trimethoxysilane, $\gamma$-glycidoxy propyl trimethoxysilane, $\gamma$-methacryloyloxy propyl trimethoxysilane, $\gamma$-aminopropyl trimethoxysilane, N-$\beta$(aminoethyl) $\gamma$-aminopropyl trimethoxysilane, N-phenyl ?$\gamma$-aminopropyl trimethoxysilane, and $\gamma$-mercaptopropyl trimethoxysilane.

Useful titanate coupling agents include those having an organic functional group of an alkyl group + amino group type, phosphite type, pyrophosphate type, or carboxylic acid type.

Useful polymer based surface treatment agents include random or graft copolymers such as maleic-anhydride-modified polyolefin; maleic-anhydride-modified styrene-ethylene-butadiene-styrene copolymer; block copolymers such as propylene-acrylate; and hydrophobic group-hydrophilic group copolymer.

Of these, the surface treatment agent to be used as filler (C) is preferably at least one compound selected from the group of phosphate based compound, fatty acid, polymer based surface treatment agent, surface active agent, silane coupling agent, and titanate coupling agent. More preferable is a compound selected from the group of phosphate based compound and fatty acid.

To improve the dispersibility of filler (C) in a resin composition, it is preferable to add a dispersing agent.

It is preferable that the content of filler (C) is 1 to 400 parts by mass relative to the total mass of resin (A) and resin (B), which accounts for 100 parts by mass. The moisture permeability will not improve if the content is less than 1 part by mass. The moisture permeability will not improve if the content is less than 1 part by mass. If the content is more than 400 parts by mass, on the other hand, the film may be poor in tensile strength and tensile elongation, and the melt processability and stretchability during film production may worsen. The blending quantity of filler (C) is preferably 10 to 400 parts by mass, more preferably 20 to 300 parts by mass, still more preferably 30 to 200 parts by mass, still more preferably 40 to 150 parts by mass, and particularly preferably 50 to 100 parts by mass, relative to the total mass of resin (A) and resin (B), which accounts for 100 parts by mass.

(Crystal nucleating agent)

The porous film according to the present invention may contain a crystal nucleating agent improve the heat resistance and tear resistance of the film.

Preferable organic crystal nucleating agents include aliphatic amide compound, melamine based compound, metallic phenylphosphonate, benzenecarbamide derivative, aliphatic/aromatic carboxylic acid hydrazide, sorbitol based compound, amino acid, and polypeptide.

Preferable inorganic crystal nucleating agents include carbon black.

The content of the crystal nucleating agent preferably 0.1 to 10 parts by mass, more preferably 0.5 to 5 parts by mass, relative to the total mass of resin (A) and resin (B), which accounts for 100 parts by mass.

(Elongation percentage)

It is preferable that the porous film according to the present invention has an elongation percentage of 50 to 500% in both the length direction and the width direction (the direction perpendicular to the length direction). The processability is high if the elongation percentage is 50% or more, while if the elongation percentage is 500% or less, serious sagging and creases will not occur when the film is travelling between rollers or being wound up during the film production process, thus leading to a roll having a good appearance and high unwinding performance. The elongation percentage in the length direction and the width direction is more preferably 75% or more and 450% or less and still more preferably 100% or more and 400% or less.

A method to maintain an elongation percentage of 50 to 500% in both the length direction and the width direction is adjusting the blending quantities of the polylactic acid based resin, thermoplastic resin that is not a polylactic acid based resin, and filler in the preferable range described above.

(Elastic modulus)

To have an adequate flexibility, the porous film according to the present invention preferably has a tensile modulus of 50 to 2,000 MPa in both the length direction and the width direction. The tensile modulus is more preferably 100 to 1,500 MPa, still more preferably 150 to 1,200 MPa, and particularly preferably 200 to 1,000 MPa.

A method to maintain a tensile modulus of 50 to 2,000 MPa in both the length direction and the width direction is adjusting the blending quantities of the polylactic acid based resin, thermoplastic resin that is not a polylactic acid based resin, and filler in the preferable range described above.

(Porosity)

It is important for the porous film according to the present invention to have a porosity of 1 to 80%. The moisture permeability will not be sufficiently high if the porosity is less than 1%, while the tensile strength and tensile elongation will not be sufficiently high if the porosity is more than 80%. The porosity is preferably 10 to 80%, more preferably 20 to 75%, still more preferably 30 to 70%, and particularly preferably 40 to 65%.

A method to achieve a porosity of 1 to 80% is adjusting the blending quantities of resin (A) (polylactic acid based resin), resin (B) (thermoplastic resin that is not a polylactic acid based resin), and filler (C) in the ranges described above and subsequently carrying out the undermentioned method to produce a porous film. A porosity in the aforementioned range can be achieved more efficiently by combining a preferable resin based plasticizer and a preferable thermoplastic resins that is not a resin based plasticizer in a preferable compounding ratio to prepare resin (B).

(Thickness)

It is preferable that the porous film according to the present invention has a film thickness of 5 to 200 $\mu$m. Maintaining a film thickness of 5 $\mu$m or more ensures that the resulting film will have high bending strength, high handleability, good roll appearance, and good unwinding properties. If the film thickness is 200 $\mu$m or less, the resulting film will be high in flexibility and moisture permeability, and in particular, destabilization of bubbles will be prevented by the film's own weight when produced by inflation molding. The film thickness is more preferably 7 to 150 $\mu$m, still more preferably 10 to 100 $\mu$m, and still more preferably 12 to 50 $\mu$m.

(Heat shrinkage degree)

The porous film according to the present invention preferably has a heat shrinkage degree of -5 to 5% in both the length direction and the width direction after being treated at 65°C for 30 min. If the heat shrinkage degree is 5% or less, the variation with time in the length-directional shrinkage of the wound-up film, which gives rise to deterioration in roll appearance due to so-called roll shrinkage, can be depressed. This also prevents blocking from taking place due to excessively strong winding up. If the heat shrinkage degree is -5% or more, the variation with time in the length-directional shrinkage of the wound-up film, which gives rise to deterioration in roll appearance, can be depressed. Here, a heat shrinkage degree of a negative value less than zero means that the film is stretched.

(Organic lubricant)

The composition to constitute the porous film according to the present invention preferably contains an organic lubricant accounting for 0.1 to 5 mass% in the entire 100 mass% of the composition. In such a case, it is possible to prevent blocking from taking place in the film, after being wound up. If the process for producing the porous film according to the present invention includes a step of pelletizing a composition, followed by drying, re-melt-kneading, extrusion, and film production, as described below, blocking among pellets will be prevented to ensure high handleability.
Effective organic lubricants include, for instance, aliphatic hydrocarbons such as liquid paraffin, natural paraffin, synthetic paraffin, and polyethylene; fatty acids such as stearate, lauryl acid, hydroxystearate, and hardened castor oil; fatty acid amides such as stearic amide, oleic amide, erucamide, lauric amide, ethylene bisstearic amide, ethylene bisoleic amide, and ethylene bislauric amide; fatty acid metal salts such as aluminum stearate, lead stearate, calcium stearate, and magnesium stearate; fatty acid (partial) esters of polyhydric alcohol such as glycerin fatty acid ester and sorbitan fatty acid ester; and long-chain fatty acid esters such as stearate butyl ester, montan wax, and other long-chain ester wax. In particular, fatty acid amide based organic lubricants are preferable because they are moderately compatible with polylactic acid and accordingly can be effective in small amounts. In particular, organic lubricants with a relatively high melting point such as ethylene bis-stearamide, ethylene bis-oleamide, and ethylene bis-lauramide are preferable from the viewpoint of developing high blocking resistance.

(Additives)

The composition to constitute the porous film according to the present invention may contain additives other than those described above as long as they do not impair the effect of the present invention. Useful examples include, for instance, generally known plasticizers, antioxidants, ultraviolet ray stabilization agents, color protection agents, delustering agents, antibacterial agents, deodorants, flame retardants, weathering agents, antistatic agents, antioxidants, ion exchange agents, tackifiers, antifoaming agents, color pigments, and dyes.
Useful plasticizers include acetyl citrate based ones, phthalate based ones, aliphatic dibasic acid ester based ones, phosphate based ones, polyvalent hydroxycarboxylic acid ester based ones, fatty acid ester based ones, polyhydric alcohol ester based ones, epoxy based ones, polyester based ones, polyalkylene ether based ones, ether ester based ones, acrylate based ones.
Useful antioxidants include hindered phenolic antioxidants and hindered amine based antioxidants.
Useful deodorants include zeolite based deodorants that contain a metal ion in the zeolite backbone structure, and commercial products include the Zeomic (registered trademark) series supplied by Sinanen Zeomic Co., Ltd.

(Carboxyl terminal group)

When the porous film according to the present invention is applied to uses, such as packaging of various industry products, that do not require biodegradability or commonly require durability for long-term storage, it is preferable that the carboxyl terminal groups in the film account for 30 equivalents/$10^3$ kg or less, more preferably 20 equivalents/$10^3$ kg or less, and still more preferably 10 equivalents/$10^3$ kg or less, in order to develop a high durability by depressing the strength deterioration of the polylactic acid resin that may be caused by hydrolysis. If the carboxyl terminal groups in the film account for 30 equivalents/$10^3$ kg or less, the quantity of carboxyl end groups, which can act as autocatalyst for hydrolysis, is maintained at an adequately low level, making it possible to developing a practically high durability in many cases, depending on the intended uses.
The methods available to maintain the quantity of carboxyl terminal groups in the film at 30 equivalents/$10^3$ kg or less include, for instance, the method of controlling it by using an appropriate catalyst or heat history during the synthesis of the polylactic acid resin, the method of relaxing the heat history by, for instance, decreasing the extrusion temperature or shortening the residence time during the film production process, and the method of using a reactive compound to cap the carboxyl terminal groups.

If a reactive compound is used to cap the carboxyl terminal group, it is preferable that at least part of the carboxyl terminal groups in the film are capped, and it is more preferable that all of them are capped. Useful reactive compounds include, for instance, condensation-reaction type compounds such as aliphatic alcohol and amide compound, and addition-reaction type compounds such as carbodiimide compounds, epoxy compounds, and oxazoline compounds. From the viewpoint of depressing the formation of unnecessary by-products during reaction, addition-reaction type compounds are preferable, and in particular, carbodiimide compounds and epoxy compounds preferable in terms of reaction efficiency.

(Content of lactic acid oligomer components)

In the porous film according to the present invention, the content of the lactic acid oligomer components contained in the film is preferably 0.3 mass% or less. It is more preferably 0.2 mass% or less, and more preferably 0.1 mass% or less. If the content of the lactic acid oligomer components contained in the film is 0.3 mass% or less, it is possible to depress the deterioration in handleability that can be caused by lactic acid oligomer components remaining the film in the form of powder or liquid precipitation, prevent the degradation of the film over time through depression of hydrolysis of the polylactic acid based resin, and depress characteristic odors of polylactic acid. A lactic acid oligomer component as referred to herein is a cyclic dimer (lactide) of lactic acid that accounts for the largest part in the lactic acid, linear oligomers and cyclic oligomers of lactic acid existing in the film, namely, LL-lactide, DD-lactide, or DL(meso)-lactide. Methods to adjusting the content of the lactic acid oligomer components contained in the film to 0.3 mass% or less will be described later.

(Production method)

In the next place, the porous film production method according to the present invention is described in detail, but it should be understood that the invention is not construed as being limited thereto.

A polylactic acid based resin to be used as resin (A) for the present invention can be produced by, for instance, a process as described below. L-lactic acid or D-lactic acid is used as a stating material. A hydroxycarboxylic acid that is not a lactic acid as mentioned above may be used in combination. A cyclic ester intermediate of a hydroxycarboxylic acid such as lactide and glycolide may also be used as a starting material. Dicarboxylic acids and glycols may also be usable.

A polylactic acid based resin can be produced by direct dehydration and condensation of starting materials as given above, or ring opening polymerization of a cyclic ester intermediate as given above. In the case where direct dehydration and condensation, for instance, are carried out for production, a high-molecular weight polymer is obtained by performing azeotropic dehydration and condensation of lactic acid or a mixture of lactic acid and a hydroxycarboxylic acid in the presence of an organic solvent, particularly preferably in the presence of a phenyl ether based solvent, and subsequently removing water from the solvent distilled out from the azeotropic step to provide a virtually water-free solvent, followed by feeding it back to the reaction system for polymerization.

It is also known that a high-molecular weight polymer can be produced also by subjecting a cyclic ester intermediate such as lactide to ring opening polymerization under reduced pressure using a catalyst such as tin octylate. Here, a polymer with a smaller lactide content can be produced by, for instance, the following methods: the method of controlling the conditions for removal of water and low molecule compounds in the organic solvent during heated reflux, the method of deactivating the catalyst after completion of the polymerization reaction to depress depolymerization, and the method of heat-treating the resulting polymer.

A composition to be used to constitute the porous film according to the present invention, namely, a composition containing resin (A) (polylactic acid based resin), resin (B) (a thermoplastic resin that is not a polylactic acid based resin), and filler (C), as well as other components such as organic lubricant that are added as required, can be produced by dissolving these components in a solvent, mixing them uniformly, and then removing the solvent to separate a composition, but the use of a melt-kneading process in which a composition is produced by melt-kneading the components is preferable this does not require steps for dissolving the starting materials in a solvent and subsequently removing the solvent. There are no specific limitations on the melt-kneading method, and generally known mixers including kneader, roll mill, Banbury mixer, and uniaxial or twin screw extruder may be used. In particular, it is preferable to use a uniaxial or twin screw extruder from the viewpoint of productivity.

Melt-kneading is performed preferably in the temperature range of 150°C to 240°C, and it is more preferably in the range of 190°C to 210°C to prevent degradation of the lactic acid based resin.

The porous film according to the present invention can be produced from a composition prepared as described above by, for instance, existing film production methods such as the generally known inflation molding method, tubular method, and T-die cast method.

When the porous film according to the present invention is produced by, for instance, pelletizing a composition containing polylactic acid based resin as prepared by the method described above, followed by re-melt-kneading, extrusion, and film production, it is preferable to dry the pellets at 60 to 100°C for 6 hours or more to reduce the water content in the composition to 500 ppm or less. It is preferable, furthermore, to vacuum-dry it in a high-degree vacuum with a degree of vacuum of 10 Torr or less in order to reduce the lactide content in the composition. This is preferable because a decrease in the water content in the composition to 500 ppm or less and a decrease in the lactide content serve to prevent hydrolysis of the polylactic acid based resin from taking place during the melt-kneading step, thereby preventing a decrease in molecular weight, providing a composition with a melt viscosity of a moderate level, and stabilizing the film production process. From a similar point of view, it is preferable to use a vent-type twin screw extruder for pelletizing of the composition or melt-extrusion/film production and perform melt-extrusion while removing water and volatile components such as low molecular weight substances.

To produce the porous film according to the present invention by inflation molding, the following method, for instance, can be used. A composition as produced by a method as described above is melt-extruded by a vent-type twin screw extruder, fed to a ring die, and discharged from the ring die while supplying dry air into it is interior to form balloons (bubbles). The film is then uniformly air-cooled and solidified by air rings and folded flat by nip rolls as it is taken up at a specified take-up speed, followed by cutting open either or both ends as necessary and winding up, to provide an intended porous film.

To develop a high moisture permeability, it is important to control the temperature of the ring die, and it is preferable to adjust the temperature of the ring die to 150 to 190°C, more preferably 155 to 185°C. It is preferable to use a spiral-type ring die from the viewpoint of thickness accuracy and uniformity for the resulting film.

Other various surface treatments may be performed after film formation to improve printing properties, lamination suitability, coating suitability, and the like. The available methods for surface treatment include corona discharge treatment, plasma treatment, flame treatment, and acid treatment. Any of them can be used effectively, but corona discharge treatment is the most preferable because it can be performed continuously, needs only simple equipment that can be added easily to conventional film production facilities, and can be performed by simple operations.

The porous film according to the present invention is high in bleed resistance and blocking resistance, and accordingly, the film wound up in a roll can be unwound smoothly without troubles.

To produce the porous film according to the present invention by inflation molding, it is important to control the blow ratio and the draw ratio in preferable ranges so that a porosity of 1 to 80% is achieved. The blow ratio mentioned above is the ratio RL/RO where RL and RO denote the final radius of bubbles and the radius of the ring die, respectively. The draw ratio is the ratio VL/VO where VL and VO denote the wind-up speed of the formed film and the discharge speed of molten resin from the die lip. To achieve a porosity of 1 to 80%, the bow ratio is preferably in the range of 1.5 to 5.0, more preferably 2.0 to 4.5, and still more preferably be 2.5 to 4.0. To achieve a porosity of 1 to 80%, furthermore, the draw ratio is preferably in the range of 2 to 100, more preferably 5 to 80, still more preferably be 10 to 60, and particularly more preferably 20 to 40.

To produce the porous film according to the present invention by the T-die cast method, it is important to control the stretching temperature and the stretching ratio in the following preferable ranges so that a porosity of 1 to 80% is achieved. For instance, a useful method is as follows. A composition as prepared as described above is melt-extruded by a vent-type twin screw extruder, discharged through a slit-type orifice with lip intervals of 0.5 to 3 mm, and brought in contact with a metallic casting drum for cooling set to a surface temperature of 0 to 40°C by applying static electricity using a wire-like electrode with a diameter of 0.5 mm, thereby providing a non-oriented cast film.

A non-oriented film thus produced is conveyed on heating rollers to heat it to a temperature for longitudinal stretching. For this heating, auxiliary heated means such as infrared ray heater may be used in combination. The stretched temperature is preferably in the range of 50 to 90°C, more preferably 55 to 85°C, and still more preferably 60 to 80°C. The non-oriented film thus heated is stretched in one step or in two or more multiple steps in the film's length direction by making use of the differences in circumferential speed between heating rollers. The total stretching ratio is preferably 1.5 to 5, and more preferably 2 to 4.

The film thus uniaxially stretched is first cooled, introduced into a tenter with the ends of the film held by clips, and stretched in the width direction. The stretching temperature is preferably 55 to 95°C, more preferably 60 to 90°C, and still more preferably 65 to 85°C. The stretching ratio is preferably 1.5 to 5, more preferably 2 to 4.

The film may be stretched uniaxially in either the longitudinal or the transverse direction, or biaxial in both longitudinal and the transverse directions. In addition, longitudinal re-stretching and/or transverse re-stretching may be carried out as required. Then, this stretched film is heat-fixed under tension or while being relaxed in the width direction. The heat treatment temperature is preferably 90 to 150°C, more preferably 100 to 140°C, and still more preferably 110 to 130°C. To decrease the heat shrinkage degree of the film, the heat treatment temperature may be increased. The heat treatment is preferably continued for 0.2 to 30 seconds, through there are no specific limitations. The relaxation degree is preferably 1 to 10%, more preferably 3 to 5%, from the viewpoint of decrease the heat shrinkage degree in the width direction. It is still more preferable to cool the film before starting heat fixation treatment. Furthermore, the film may be cooled to room temperature and wound up while being relaxed in the length and width directions as required to produce an intended porous film.

For the porous film to have a high moisture permeability, pores have to penetrate through the film. For the conventional techniques, however, it is difficult to produce an adequate number of through-pores in a polylactic acid based film. For the present invention, it was found that if a polylactic acid based resin (A), a thermoplastic resin (B) that is not a polylactic acid based resin, and a filler (C) is kneaded and subjected to a film 0production process under the aforementioned preferable conditions, boundary separation occurs, starting from filler (C), between polylactic acid based resin (A) and thermoplastic resin (B) that is not a polylactic acid based resin to form through-pores, thereby providing a porous film having a high moisture permeability unachievable by the convention techniques without sacrificing other properties.

Another embodiment of the invention provides a porous film including a polylactic acid based resin (A) and a thermoplastic resin (B) that is not a polylactic acid based resin, wherein the moisture permeability is 1,000 g/(m$^2$·day) or more, the mass loss ratio after hot-water treatment being 10% or less, and the tensile modulus being 50 to 2,000 MPa.

(Moisture permeability)

It is important for the porous film according to the present invention to have a moisture permeability of 1,000 g/(m$^2$·day) or more. The moisture permeability referred to for the invention is measured according to the method described in paragraph "Moisture permeability" in Examples. For the conventional techniques, it is difficult to produce a polylactic acid based film with a high moisture permeability as described above. Compared with them, the method according to the invention can form an adequate number of through-pores in a polylactic acid based film, thus serving to provide a porous film with a moisture permeability of 1,000 g/(m$^2$·day) or more. Being this high in moisture permeability, such films can be preferably used for products that are required to be moisture-permeable.

The moisture permeability is preferably 1200 g/(m$^2$·day) or more, more preferably 1300 g/(m$^2$·day) or more, and still more preferably 1500 g/(m$^2$ · day) or more.

(Mass loss ratio after hot-water treatment)

It is important for the porous film according to the present invention to have a mass loss ratio after hot-water treatment of 10% or less. The mass loss ratio after hot-water treatment referred to for the invention is measured according to the method described in paragraph "Bleed resistance" in Examples. As described above, the porous film according to the present invention characterized by having an adequate number of through-pores resulting from the use of polylactic acid based resin (A) and thermoplastic resin (B) that is not a polylactic acid based resin. On the other hand, this can give rise to a risk of bleed-out of resin (B) that decreases the bleed-out resistance. If the mass loss ratio after hot-water treatment is 10% or less, it serves to control the bleed resistance at a practical level to suite preferable uses of the film according to the invention.

The available means of achieving a mass loss ratio after hot-water treatment of 10% or less include the use of preferable resin based plasticizers as listed above and the use of a mixture a crystalline polylactic acid based resin and a amorphous polylactic acid based resin as resin (A).

The mass loss ratio after hot-water treatment is preferably 5% or less, more preferably 3% or less, still more preferably 2% or less, and particularly preferably 1% or less. Examples

The present invention will be illustrated below in greater detail with reference to Examples, but it should be understood that the invention is not construed as being limited thereto.

[Measurement and evaluation methods]

Measurements and evaluations made in Examples were carried out under the following conditions.

(1) Tensile modulus (MPa)

Tensilon (registered trademark) UCT-100 supplied by Orientec Co., Ltd., was used in an atmosphere of room temperature of 23°C and a relative humidity of 65% for tensile modulus determination. Specifically, strip specimens with a length of 150 mm in the measuring direction and a width of 10 mm were cut out, and 10 measurements were made in both the length direction and the width direction with an initial tensile chuck distance of 50 mm and a tension speed of 200 mm/min according to the method specified in JIS K-7127 (1999), followed by averaging them to represent their tensile modulus.

(2) Tensile elongation (%)

Tensilon (registered trademark) UCT-100 supplied by Orientec Co., Ltd., was used in an atmosphere of room temperature of 23°C and a relative humidity of 65% for tensile elongation determination. Specifically, strip specimens with a length of 150 mm in the measuring direction and a width of 10 mm were cut out, and 10 measurements were made in both the length direction and the width direction with an initial tensile chuck distance of 50 mm and a tension speed of 200 mm/min according to the method specified in JIS K-7127 (1999), followed by averaging them to represent their tensile elongation.

(3) Porosity (%)

A specimen of 30 mm × 40 mm was cut out from the film produced. An electronic gravimeter (SD-120L, supplied by Mirage Trading Co., Ltd., was used in an atmosphere of room temperature of 23°C and a relative humidity of 65% for specific gravity determination. Three measurements were made and their average was calculated to represent the specific gravity ρ of the film.
Then, the film that has undergone the measurement was subjected to hot pressing at 280°C and 5 MPa, and subsequently quenched with water of 25°C to prepare a sheet completely free from pores. Following this, several pieces of film were stacked and hot-pressed to prepare a sheet as necessary. The specific gravity of this sheet was measured by the same method as described above and the average was taken as the specific gravity (d) of the resin. The specific gravity of the film and the specific gravity of the resin were substituted in the following equation to calculate the porosity:

$$\text{Porosity (\%)} = [(d - \rho) / d] \times 100.$$

(4) Moisture permeability

Using a thermo-hygrostat set at 25°C and 90% RH, the moisture permeability $(g/(m^2 \cdot day))$ was measured according to the method specified in JIS Z0208 (1976). Based on the measurement, the moisture permeability was evaluated according to the following criteria.

A: 1500 $g/(m^2 \cdot day)$ or more
B: 1,000 $g/(m^2 \cdot day)$ or more and less than 1500 $g/(m^2 \cdot day)$
C: 100 $g/(m^2 \cdot day)$ or more and less than 1,000 $g/(m^2 \cdot day)$
D: less than 100 $g/(m^2 \cdot day)$

(5) Heat resistance

A crease-free film for evaluation was pasted in a state of tension on an aluminum frame with an inner size of 150 mm × 150 mm and then the film was fixed to the frame using several binder clips for stationery use, left to stand for 5 min in a hot-air oven maintained at a constant temperature, and then taken out for observation of the state of the film. The test was carried out repeatedly with the temperature of the hot-air oven changed at intervals of 5°C, and the heat resistant temperature (°C) was determined as the highest temperature at which the film was free from defects such as formation of holes and fusion bonding of the film to the frame. Based on the measurement, the heat resistant temperature was evaluated according to the following criteria.

A: 160°C or more
B: 140°C or more and less than 160°C
C: 120°C or more and less than 140°C
D: less than 120°C

(6) Bleed-out resistance

The mass loss ratio after hot-water treatment (%) of a film sample was measured as described below and used as an index to represent the bleed-out resistance. The bleed-out resistance increases with a decreasing mass loss ratio.
In advance, the mass (g) of untreated film was measured (to three places of decimals) using a sample of about 0.5 g humidity-conditioned for 1 day or longer in an atmosphere at a temperature of 23°C and a humidity of 65% RH. Then, the sample was treated for 30 min in distilled water at 90°C and subsequently humidity-conditioned under the same conditions as for the untreated film, followed by measuring the mass (g) (to three places of decimals). Finally, the decrease in mass of the treated sample was divided by the mass of the untreated sample calculate the mass loss ratio.

(7) Mass average molecular weight and number average molecular weight

Measurement obtained by gel permeation chromatography (GPC) were converted based on a standard polymethyl methacrylate. GPC measurements were made by means of a Waters 410 differential refractometer supplied by Waters used as detector, Model 510 high performance liquid chromatograph supplied by Waters used as pump, and Shodex GPC HFIP-806M and Shodex GPC HFIP-LG connected in series used as column. The measuring conditions included a flow rate of 0.5 mL/min, use of hexafluoroisopropanol as solvent, and injection of 0.1 mL of a specimen solution with a concentration of 1 mg/mL.
The materials used in Examples are described below.

[Resin (A)]

(A-1)

Crystalline poly-L-lactic acid resin, mass average molecular weight = 200,000, D-form content = 1.4%, melting point =166°C

(A-2)

Crystalline poly-L-lactic acid resin, mass average molecular weight = 200,000, D-form content = 5.0%, melting point =150°C

(A-3)

Amorphous poly-L-lactic acid resin, mass average molecular weight = 200,000, D-form content = 12.0%, melting point = none
The above-mentioned average molecular weight was measured using Warters 2690 supplied by Nihon Waters K.K. at a column temperature 40°C along with polymethyl methacrylate as the standard, and also using a chloroform solvent.
To determine the melting point of a polylactic acid resin, it was first heated for 24 hours in a hot air oven at 100°C, and then a 5 mg specimen was taken on the aluminum tray of an RDC 220 differential scanning calorimeter supplied by Seiko Instruments Inc. and heated from 25°C up to 250°C at a heating rate of 20°C/min while measuring the temperature of the crystal melting peak.

[Resin (B)]

(B-1)

Polybutylene adipate - terephthalate resin (Ecoflex (trade name) FBX7011 supplied by BASF)

(B-2)

Polybutylene succinate based resin (GSPla (registered trademark) AZ91T, supplied by Mitsubishi Chemical Corporation)

(B-3)

Polybutylene succinate - adipate based resin (Bionolle (registered trademark) #3001 supplied by Showa Highpolymer Co., Ltd.)

(B-4)

In a reaction container equipped with a stirrer, 62 parts by mass of polyethylene glycol with a number average molecular weight 8,000, 38 parts by mass of L-lactide, and 0.05 part by mass of tin octylate were mixed and polymerized in a nitrogen atmosphere at 160°C for 3 hours to produce a block copolymer B4 having a poly-L-lactic acid segment with a number average molecular weight of 2,500 at each end of polyethylene glycol with a number average molecular weight of 8,000.

[Plasticizer (P)]

(P-1):

Acetyl tributyl citrate (Citroflex (trade name) A-4, supplied by Pfizer)

[Filler (C)]

(C-1)

Calcium carbonate (Caltex (trade name) R, supplied by Maruo Calcium Co., Ltd., average particle diameter 2.8 um, surface treated with fatty acid containing stearic acid as primary component, surface treatment agent accounting for 3 mass% or less)

(C-2)

Talc (SG-95 (trade name), supplied by Nippon Talc Co., Ltd., average particle diameter 2.5 $\mu$m)

[Preparation of porous film]

(Example 1)

A 15 parts by mass of a polylactic acid resin (A1), 45 parts by mass of a polylactic acid resin (A3), 20 parts by mass of a polybutylene adipate - terephthalate resin (B1), 20 parts by mass of a block copolymer plasticizer (B4), and 70 parts by a mass of filler (C1) were supplied to a vent-type twin screw extruder with a cylinder temperature of 190°C and a screw diameter of 44 mm, and melt-kneaded while being deaerated from the vacuum vent portion, mixed to ensure uniformity, and pelletized to provide a composition. This composition in the form of pellets were vacuum-dried for 12 hours in a rotary-drum type vacuum dryer at a temperature of 60°C.
The pellets dried were supplied to a single screw extruder with a cylinder temperature of 190°C, extruded through a T-die orifice at a temperature of 190°C to provide a film, which is then cast onto a drum cooled at 20°C to prepare a non-oriented film. This non-oriented film was stretched 3-fold in the length direction by a roller-type stretching machine at temperature 70°C. This uniaxially oriented film was once cooled on a cooling roller and then, with both ends gripped by clips, introduced into a tenter, where it was stretched 3-fold in the width direction at temperature 70°C. Subsequently, it was heat-treated for 10 seconds at temperature 120°C under a constant length conditions, followed by 5% relaxation treatment in the width direction to provide a porous film with a thickness of 20 $\mu$m. Characteristics of the resulting film are shown in Table 1.

(Examples 2 to 29, and Comparative example 2 to 5)

The same procedures as in Example 1 except for using film compositions as given in Tables 1 to 5 were carried out to produce films with a thickness of 20 $\mu$m. Characteristics of the resulting films are shown in Tables 1 to 5.

(Comparative example 1)

The same procedure as in Example 4 except for using a film composition as given in Table 4 was carried out to produce a non-oriented film with a thickness of 20 $\mu$m. The stretching step was not performed. Characteristics of the resulting film are shown in Table 4.

[Table 1]

| | | | | Example 1 | Example 2 | Example 3 | Example 4 | Example 5 | Example 6 | Example 7 | Example 8 |
|---|---|---|---|---|---|---|---|---|---|---|---|
| Composition | resin (A) | | type | A1+A3 | A1+A3 | A1+A3 | A1+A3 | A1+A3 | A1+A3 | A1+A3 | A1+A3 |
| | | | (mass%) | 15+45 | 15+45 | 15+45 | 15+45 | 15+45 | 15+45 | 15+45 | 15+45 |
| | resin (B) | | type | B1+B4 | B1+B4 | B1+B4 | B1+B4 | B1+B4 | B1+B4 | B1+B4 | B1+B4 |
| | | | (mass%) | 20+20 | 20+20 | 20+20 | 20+20 | 20+20 | 20+20 | 20+20 | 20+20 |
| | filler (C) | | type | C1 | C1 | C1 | C2 | C1 | C1 | C1 | C1 |
| | | | (parts by mass) | 70 | 70 | 70 | 70 | 20 | 50 | 100 | 300 |
| Production conditions | longitudinal stretching | temperature | °C | 70 | 70 | 70 | 70 | 70 | 70 | 70 | 70 |
| | | stretching ratio | -fold | 3 | 3.8 | 2 | 3 | 3 | 3 | 3 | 3 |
| | transverse stretching | temperature | °C | 70 | 70 | 70 | 70 | 70 | 70 | 70 | 70 |
| | | stretching ratio | -fold | 3 | 3.8 | 2 | 3 | 3 | 3 | 3 | 3 |
| Film properties | tensile modulus (MD/TD) | | MPa | 520/575 | 574/649 | 623/676 | 499/550 | 391/416 | 454/464 | 547/609 | 445/507 |
| | tensile elongation (MD/TD) | | % | 165/124 | 128/85 | 186/143 | 177/139 | 305/280 | 267/227 | 124/81 | 64/43 |
| | porosity | | % | 55 | 72 | 23 | 52 | 42 | 49 | 67 | 78 |
| | moisture permeation (moisture permeability) | | - g/(m$^2$·day) | B (1375) | A (1728) | C (650) | B (1140) | B (1059) | B (1127) | A (1680) | A (2011) |
| | heat resistance | | - | B | B | B | B | B | B | B | B |
| | bleed-out resistance | | % | 0.8 | 0.7 | 0.9 | 0.8 | 1.0 | 0.9 | 0.7 | 0.5 |

EP 2 607 415 B1

[Table 2]

| | | | | Example 9 | Example 10 | Example 11 | Example 12 | Example 13 | Example 14 | Example 15 |
|---|---|---|---|---|---|---|---|---|---|---|
| Composition | resin (A) | | type | A1+A3 | A1+A3 | A1 | A2 | A1+A3 | A1+A3 | A1+A3 |
| | | | (mass%) | 15+45 | 15+45 | 60 | 60 | 25+65 | 20+60 | 10+30 |
| | resin (B) | | type | B2+B4 | B3+B4 | B1+B4 | B1+B4 | B1+B4 | B1+B4 | B1+B4 |
| | | | (mass%) | 20+20 | 20+20 | 20+20 | 20+20 | 5+5 | 10+10 | 30+30 |
| | filler (C) | | type | C1 | C1 | C1 | C1 | C1 | C1 | C1 |
| | | | (parts by mass) | 70 | 70 | 70 | 70 | 70 | 70 | 70 |
| Production conditions | longitudinal stretching | temperature | °C | 70 | 70 | 70 | 70 | 70 | 70 | 70 |
| | | stretching ratio | -fold | 3 | 3 | 3 | 3 | 3 | 3 | 3 |
| | transverse stretching | temperature | °C | 70 | 70 | 70 | 70 | 70 | 70 | 70 |
| | | stretching ratio | -fold | 3 | 3 | 3 | 3 | 3 | 3 | 3 |
| Film properties | tensile modulus (MD/TD) | | MPa | 612/672 | 524/581 | 715/773 | 614/677 | 1720/1802 | 1325/1403 | 315/367 |
| | tensile elongation (MD/TD) | | % | 145/107 | 155/115 | 149/107 | 153/118 | 120/81 | 138/93 | 223/200 |
| | porosity | | % | 51 | 53 | 49 | 52 | 23 | 45 | 51 |
| | moisture permeation (moisture permeability) | | - g/(m$^2$·day) | B (1174) | B (1266) | B (1115) | B (1251) | C (570) | B (1172) | B (1289) |
| | heat resistance | | - | B | B | A | B | B | B | B |
| | bleed-out resistance | | % | 0.8 | 0.8 | 0.6 | 0.7 | 0.1 | 0.4 | 1.1 |

[Table 3]

| | | | | Example 16 | Example 17 | Example 18 | Example 19 | Example 20 | Example 21 | Example 22 |
|---|---|---|---|---|---|---|---|---|---|---|
| Composition | resin (A) | | type | A1+A3 | A1+A3 | A1+A3 | A1+A3 | A1+A3 | A3 | A1+A3 |
| | | | (mass%) | 5+15 | 10+20 | 20+50 | 15+45 | 15+45 | 60 | 5+55 |
| | resin (B) | | type | B1+B4 | B1 | B4 | B1+P1 | B1+B4 | B1+B4 | B1+B4 |
| | plasticizer (P) | | (mass%) | 50+30 | 70 | 30 | 20+20 | 20+20 | 20+20 | 20+20 |
| | filler (C) | | type | C1 | C1 | C1 | C1 | C1 | C1 | C1 |
| | | | (parts by mass) | 70 | 70 | 70 | 70 | 5 | 70 | 70 |
| Production conditions | longitudinal stretching | temperature | °C | 70 | 70 | 70 | 70 | 70 | 70 | 70 |
| | | stretching ratio | -fold | 3 | 3 | 3 | 3 | 3 | 3 | 3 |
| | transverse stretching | temperature | °C | 70 | 70 | 70 | 70 | 70 | 70 | 70 |
| | | stretching ratio | -fold | 3 | 3 | 3 | 3 | 3 | 3 | 3 |
| Film properties | tensile modulus (MD/TD) | | MPa | 268/301 | 365/406 | 747/970 | 611/671 | 817/852 | 460/498 | 483/524 |
| | tensile elongation (MD/TD) | | % | 258/243 | 237/212 | 115/93 | 133/107 | 291/274 | 170/133 | 167/130 |
| | porosity | | % | 48 | 21 | 37 | 39 | 7 | 53 | 54 |
| | moisture permeation (moisture permeability) | | - g/(m$^2$·day) | B (1203) | C (431) | C (862) | C (860) | C (148) | B (1294) | B (1300) |
| | heat resistance | | - | C | C | B | C | B | C | C |
| | bleed-out resistance | | % | 1.3 | 0.0 | 1.0 | 5.9 | 1.2 | 3.2 | 2.8 |

EP 2 607 415 B1

19

[Table 4]

| | | | | Example 23 | Comparative example 1 | Example 24 | Comparative example 2 | Comparative example 3 | Comparative example 4 | Comparative example 5 |
|---|---|---|---|---|---|---|---|---|---|---|
| Composition | resin (A) | | type | A1+A3 | A1+A3 | A1+A3 | A1+A3 | A1 | - | A1 |
| | | | (mass%) | 10+50 | 15+45 | 15+45 | 15+45 | 100 | - | 70 |
| | resin (B) | | type | B1+B4 | B1+B4 | B1+B4 | B1+B4 | - | B1 | P1 |
| | plasticizer (P) | | (mass%) | 20+20 | 20+20 | 20+20 | 20+20 | - | 100 | 30 |
| | filler (C) | | type | C1 | C1 | C1 | C1 | C1 | C1 | C1 |
| | | | (parts by mass) | 70 | 70 | 70 | 450 | 70 | 70 | 70 |
| Production conditions | longitudinal stretching | temperature | °C | 70 | - | 70 | 70 | 70 | 70 | 70 |
| | | stretching ratio | -fold | 3 | - | 4.2 | 3 | 1.5 | 3 | 3 |
| | transverse stretching | temperature | °C | 70 | - | 70 | 70 | 70 | 70 | 70 |
| | | stretching ratio | -fold | 3 | - 4.2 | 4.2 | 3 | 1.5 | 3 | 3 |
| Film properties | tensile modulus (MD/TD) | | MPa | 501/548 | 1168/1215 | 397/406 | unstretchable | 2458/2543 | 212/238 | 1080/1311 |
| | tensile elongation (MD/TD) | | % | 167/12 9 | 123/129 | 4/2 | | 84/76 | 188/158 | 91/82 |
| | porosity | | % | 54 | 0 | 82 | | 9 | 19 | 30 |
| | moisture permeation (moisture permeability) | | - g/(m$^2$·day) | B (1304) | D (42) | A (2038) | | C (194) | C (416) | C (521) |
| | heat resistance | | - | B | B | B | | A | D | C |
| | bleed-out resistance | | % | 2.0 | 1.9 | 0.7 | | 0.0 | 0.0 | 13.7 |

EP 2 607 415 B1

[Table 5]

| | | | | Example 25 | Example 26 | Example 27 | Example 28 | Example 29 |
|---|---|---|---|---|---|---|---|---|
| Composition | resin (A) | | type | A1+A3 | A1+A3 | A1+A3 | A1+A3 | A1+A3 |
| | | | (mass%) | 20+40 | 25+35 | 30+30 | 35+25 | 40+20 |
| | resin (B) | | type | B1+B4 | B1+B4 | B1+B4 | B1+B4 | B1+B4 |
| | | | (mass%) | 20+20 | 20+20 | 20+20 | 20+20 | 20+20 |
| | filler (C) | | type | C1 | C1 | C1 | C1 | C1 |
| | | | (parts by mass) | 70 | 70 | 70 | 70 | 70 |
| Production conditions | longitudinal stretching | temperature | °C | 70 | 70 | 70 | 70 | 70 |
| | | stretching ratio | -fold | 3 | 3 | 3 | 3 | 3 |
| | transverse stretching | temperature | °C | 70 | 70 | 70 | 70 | 70 |
| | | stretching ratio | -fold | 3 | 3 | 3 | 3 | 3 |
| Film properties | tensile modulus (MD/TD) | | MPa | 543/570 | 571/598 | 609/640 | 641/677 | 669/695 |
| | tensile elongation (MD/TD) | | % | 165/124 | 160/123 | 159/121 | 152/120 | 150/115 |
| | porosity | | % | 55 | 55 | 51 | 50 | 49 |
| | moisture permeation (moisture permeability) | | - g/(m$^2$·day) | B (1380) | B (1371) | B (1184) | B (1170) | B (1130) |
| | heat resistance | | - | B | B | B | B | B |
| | bleed-out resistance | | % | 0.8 | 0.8 | 0.7 | 0.7 | 0.7 |

In the tables, "mass%" for resin (A) and resin (B) refers to a proportion relative to the sum of resin (A) and resin (B), which accounts for 100 mass%, and "parts by mass" for filler (C) refers to a proportion relative to the sum of resin (A) and resin (B), which accounts for 100 parts by mass.

[Industrial applicability]

The porous film according to the present invention is a polylactic acid based porous film that has high flexibility, moisture permeability, heat resistance, and bleed-out resistance. The porous film according to the present invention can be used to produce medical and sanitary supplies such as base sheets of bed sheets, pillow covers, sanitary napkins, paper diapers, and other absorbent products; clothing materials such as rain apparels gloves; and packaging materials such as trash bags, compost bags, food bags for vegetables, fruits, etc., and bags for various industrial products.

**Claims**

1. A porous film including a polylactic acid based resin (A), a thermoplastic resin (B) that is not a polylactic acid based resin, and a filler (C), wherein
   resin (A) is a mixture of a crystalline polylactic acid based resin and an amorphous polylactic acid based resin, wherein the crystalline polylactic acid based resin and the amorphous polylactic acid based resin account for 5 to 60 mass% and 40 to 95 mass%, respectively, of the sum total 100 mass% of crystalline polylactic acid based resin and amorphous polylactic acid based resin;
   resin (A) and resin (B) account for 10 to 95 mass% and 5 to 90 mass%, respectively, of the sum total 100 mass% of resin (A) and resin (B), while the filler (C) accounts for 1 to 400 parts by mass of the sum total 100 parts by mass of resin (A) and resin (B),
   with the porosity being 1 to 80%.

2. A porous film as defined in Claim 1 wherein resin (B) is at least one resin selected from the group consisting of a block copolymer having a polyether segment and a polylactic acid segment, a block copolymer having a polyester segment and a polylactic acid segment, an aliphatic polyester based resin, and an aliphatic-aromatic polyester based resin.

3. A porous film as defined in Claim 2 wherein resin (B) is a .combination of a one resin selected from the group consisting of a block copolymer having a polyether segment and a polylactic acid segment and a block copolymer having a polyester segment and a polylactic acid segment, with at least one resin selected from the group consisting of an aliphatic polyester based resin and an aliphatic-aromatic polyester based resin.

4. A porous film as defined in any one of claims 1 to 3 that has a tensile modulus of 50 to 2,000 MPa.

5. A porous film including a polylactic acid based resin (A) and a thermoplastic resin (B) that is not a polylactic acid based resin, wherein
   resin (A) is a mixture of a crystalline polylactic acid based resin and an amorphous polylactic acid based resin, wherein the crystalline polylactic acid based resin and the amorphous polylactic acid based resin account for 5 to 60 mass% and 40 to 95 mass%, respectively, of the sum total 100 mass% of crystalline polylactic acid based resin and amorphous polylactic acid based resin;
   the moisture permeability is 1,000 g/(m$^2$·day) or more,
   the mass loss ratio after hot-water treatment being 10% or less, and
   the tensile modulus being 50 to 2,000 MPa.

**Patentansprüche**

1. Poröser Film mit einem auf Polymilchsäure basierenden Harz (A), einem thermoplastischen Harz (B), welches kein auf Polymilchsäure basierendes Harz ist, und einem Füllstoff (C), wobei
   Harz (A) eine Mischung von einem auf kristalliner Polymilchsäure basierenden Harz und einem auf amorpher Polymilchsäure basierenden Harz ist, wobei das auf kristalliner Polymilchsäure basierende Harz und das auf amorpher Polymilchsäure basierende Harz jeweils 5 bis 60 Gewichts-% bzw. 40 bis 95 Gewichts-% der Gesamtsumme von 100 Gewichts-% des auf kristalliner Polymilchsäure basierendem Harz und des auf amorpher Polymilchsäure basierendem Harz ausmachen;

Harz (A) und Harz (B) jeweils 10 bis 95 Gewichts-% bzw. 5 bis 90 Gewichts-% der Gesamtsumme von 100 Gewichts-% von Harz (A) und Harz (B) ausmachen, während der Füllstoff (C) 1 bis 400 Masseanteile der Gesamtsumme von 100 Masseanteilen von Harz (A) und Harz (B) ausmacht, wobei die Porosität 1 bis 80 % beträgt.

2. Poröser Film wie in Anspruch 1 definiert, wobei Harz (B) mindestens ein Harz ist, welches aus der Gruppe bestehend aus einem ein Polyether-Segment und ein Polymilchsäure-Segment besitzendem Block-Copolymer, einem ein Polyester-Segment und ein Polymilchsäure-Segment besitzendem Block-Copolymer, einem auf aliphatischen Polyester basierenden Harz und einem auf aliphatisch-aromatischem Polyester basierenden Harz, ausgewählt ist.

3. Poröser Film gemäß Anspruch 2, wobei Harz (B) eine Kombination eines Harzes, ausgewählt aus der Gruppe bestehend aus einem ein Polyether-Segment und ein Polymilchsäure-Segment besitzendem Block-Copolymer und einem ein Polyester-Segment und ein Polymilchsäure-Segment besitzendem Block-Copolymer, mit mindestens einem Harz, ausgewählt aus der Gruppe bestehend aus einem auf einem aliphatischen Polyester basierendem Harz und einem auf einem aliphatisch-aromatischen Polyester basierendem Harz, ist.

4. Poröser Film gemäß einem der Ansprüche 1 bis 3, welcher ein Elastizitätsmodul von 50 bis 2.000 MPa besitzt.

5. Poröser Film einschließlich einem auf Polymilchsäure basierendem Harz (A) und einem thermoplastischen Harz (B), welches kein auf Polymilchsäure basierendes Harz ist, wobei
Harz (A) eine Mischung von einem auf kristalliner Polymilchsäure basierendem Harz und einem auf amorpher Polymilchsäure basierendem Harz ist, wobei das auf kristalliner Polymilchsäure basierende Harz und das auf amorpher Polymilchsäure basierende Harz jeweils 5 bis 60 Gewichts-% bzw. 40 bis 95 Gewichts-% von der Gesamtsumme von 100 Gewichts-% des auf kristalliner Polymilchsäure basierenden Harzes und des auf amorpher Polymilchsäure basierenden Harzes ausmachen;
die Feuchtigkeitsdurchlässigkeit 1.000 g/(m$^2$·Tag) oder mehr beträgt,
das Masseverlustverhältnis nach Behandlung mit heißem Wasser 10 % oder weniger beträgt, und der Elastizitätsmodul 50 bis 2.000 MPa beträgt.

## Revendications

1. Film poreux comportant une résine à base d'acide polylactique (A), une résine thermoplastique (B) qui n'est pas une résine à base d'acide polylactique, et une charge (C), dans lequel
la résine (A) est un mélange d'une résine cristalline à base d'acide polylactique et d'une résine amorphe à base d'acide polylactique, où la résine cristalline à base d'acide polylactique et la résine amorphe à base d'acide polylactique représentent de 5 à 60% en masse et de 40 à 95% en masse, respectivement, de la somme totale de 100% en masse d'une résine cristalline à base d'acide polylactique et d'une résine amorphe à base d'acide polylactique ;
la résine (A) et la résine (B) représentent de 10 à 95% en masse et de 5 à 90% en masse, respectivement, de la somme totale de 100% en masse de la résine (A) et de la résine (B), tandis que la charge (C) représente de 1 à 400 parties en masse de la somme totale de 100 parties en masse de la résine (A) et de la résine (B),
la porosité étant de 1 à 80%.

2. Film poreux selon la revendication 1, dans lequel la résine (B) est au moins une résine choisie dans le groupe constitué par un copolymère séquencé ayant un segment de polyéther et un segment d'acide polylactique, un copolymère séquencé ayant un segment de polyester et un segment d'acide polylactique, une résine à base de polyester aliphatique et une résine à base de polyester aliphatique-aromatique.

3. Film poreux selon la revendication 2, dans lequel la résine (B) est une combinaison d'une résine choisie dans le groupe constitué par un copolymère séquencé ayant un segment de polyéther et un segment d'acide polylactique et un copolymère séquencé ayant un segment de polyester et un segment d'acide polylactique, avec au moins une résine choisie dans le groupe constitué par une résine à base de polyester aliphatique et une résine à base de polyester aliphatique-aromatique.

4. Film poreux selon l'une quelconque des revendications 1 à 3, qui a un module d'élasticité allant de 50 à 2000 MPa.

5. Film poreux comportant une résine à base d'acide polylactique (A) et une résine thermoplastique (B) qui n'est pas une résine à base d'acide polylactique, dans lequel

la résine (A) est un mélange d'une résine cristalline à base d'acide polylactique et d'une résine amorphe à base d'acide polylactique, dans lequel la résine cristalline à base d'acide polylactique et la résine amorphe à base d'acide polylactique représente de 5 à 60% en masse et de 40 à 95% en masse, respectivement, de la somme totale de 100% en masse d'une résine cristalline à base d'acide polylactique et d'une résine amorphe à base d'acide polylactique ;

la perméabilité à l'humidité est supérieure ou égale à 1000 g/ (m$^2$·jour),

le taux de perte de masse après un traitement à l'eau chaude étant inférieur ou égal à 10%, et

le module d'élasticité étant de 50 à 2000 MPa.

**EP 2 607 415 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007112867 A
- JP 2004149679 A
- JP 2003082140 A

**Non-patent literature cited in the description**

- *JIS K-7127,* 1999